# EUROPÄISCHE PATENTSCHRIFT

(11) **EP 0 514 668 B1**
(45) Veröffentlichungstag und Bekanntmachung des Hinweises auf die Patenterteilung: **26.07.1995**
(21) Anmeldenummer: 92106708.8
(22) Anmeldetag: 18.04.1992
(51) Int. Cl.: H02B 1/30

(54) **Schrank**
Cabinet
Armoire

(30) Priorität: 22.05.1991 CH 1514/91
(43) Veröffentlichungstag der Anmeldung: 25.11.1992
(73) Patentinhaber: ASEA BROWN BOVERI AG, 5400 Baden (CH)
(72) Erfinder: Kostic, Mirko, CH-5400 Baden (CH)

(56) Entgegenhaltungen:
- EP-A- 0 129 056
- DE-A- 2 504 721
- DE-A- 2 816 287
- DE-A- 3 917 985
- DE-U- 8 300 044
- FR-A- 1 048 716
- FR-A- 2 030 686
- US-A- 3 056 639

## Beschreibung

### TECHNISCHES GEBIET

Die Erfindung geht aus von einem Schrank gemäss dem Oberbegriff des Anspruchs 1.

### STAND DER TECHNIK

Es sind Schränke mit einem tragenden metallischen Gerüst mit rechteckiger Grundfläche bekannt und mit Gerüstpfosten im Bereich der Ecken der Grundfläche. Die Gerüstpfosten sind aus C-Profilen gefertigt und ebenso die Verbindungsteile zwischen den Pfosten. Dieses Gerüst wird dann mit Verkleidungsteilen versehen, beispielsweise mit Türen an Front- und Rückseite, mit Seitenwänden und Dach- und Bodenblechen. Es sind die verschiedensten Ausführungen derartiger Schränke bekannt. Die verwendeten C-Profile sind mit einem genormten Lochraster versehen, sodass beim Bestücken der Schränke die Einbauteile mittels gewindeformender Schrauben rasch montiert werden können. Derartige Schränke können beispielsweise in Niederspannungsverteilanlagen oder als Elektronikschränke für Schutzanlagen oder für Steuerungszwecke eingesetzt werden. Elektronikschränke werden häufig mit Schwenkrahmen für den Einbau elektronischer Geräte versehen.

Bei bisher üblichen Schränken wird das Schrankgerüst in Montagelehren winkelgerecht zusammengeschraubt. Zum Teil sind für die Gerüstecken spezielle Konstruktionselemente nötig, die aufwendig und teuer sind. Soll ein derartiger Schrank für eine höhere Schutzklasse ausgerüstet werden, so ist dies in der Regel nur mit vergleichsweise grossem Montageaufwand möglich.

Das Gebrauchsmuster DE-U-8 300 044 zeigt einen Schrank mit einem tragenden metallischen Gerüst mit rechteckiger Grundfläche, mit im Bereich der Ecken der Grundfläche vorgesehenen Gerüstpfosten aus Blechprofil, mit einem Dachblech und einem Bodenblech und mit am Gerüst anbringbaren Verkleidungsteilen. Der Schrank weist zudem ein Deckblech auf, welches sowohl als Dachblech als auch als Bodenblech einsetzbar ist. Das tragende metallische Gerüst ist mit Hilfe einer für das genaue Ausrichten nötigen Schweisslehre verschweisst worden.

### DARSTELLUNG DER ERFINDUNG

Die Erfindung, wie sie im Anspruche 1 gekennzeichnet ist, löst die Aufgabe, einen Schrank mit einem tragenden metallischen Gerüst zu schaffen, der vergleichsweise einfach und ohne Montagelehren zu montieren ist und der zudem vergleichsweise einfach für eine hohe Schutzklasse auszustatten ist.

Die durch die Erfindung erreichten Vorteile sind im wesentlichen darin zu sehen, dass das Schrankgerüst mit einfachen Mitteln erstellt werden kann, und dass es eine vergleichsweise grosse Steifigkeit aufweist. Eine Montagelehre ist nur dann erforderlich, wenn eine Schrankreihe zusammengestellt werden muss. Besonders vorteilhaft ist es, dass eine einfache Abdichtung der Fronttüre und gegebenenfalls auch der rückseitigen Türe für eine hohe Schutzklasse oberhalb IP 50 möglich ist. Zudem ist der Einbau eines Schwenkrahmens für den Einbau von Elektronikbauteilen ohne Einpassarbeiten einfach möglich.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
- Fig.1: eine stark vereinfachte Explosionszeichnung eines erfindungsgemässen Schrankes,
- Fig.2a-d: eine Skizze einer Konsole für das Deckblech,
- Fig.3a-c: eine Skizze eines Teiles des Deckblechs,
- Fig.4a-b: eine Skizze eines kompletten Deckblechs,
- Fig.5a-c: eine Skizze eines Gerüstpfostens,
- Fig.6: eine erste Variante eines Gerüstpfostens,
- Fig.7: eine zweite Variante eines Gerüstpfostens und
- Fig.8: eine schematische Darstellung einer montierten Dichtung.

Bei allen Figuren sind gleich wirkende Elemente mit gleichen Bezugszeichen versehen.

### WEGE ZUR AUSFÜHRUNG DER ERFINDUNG

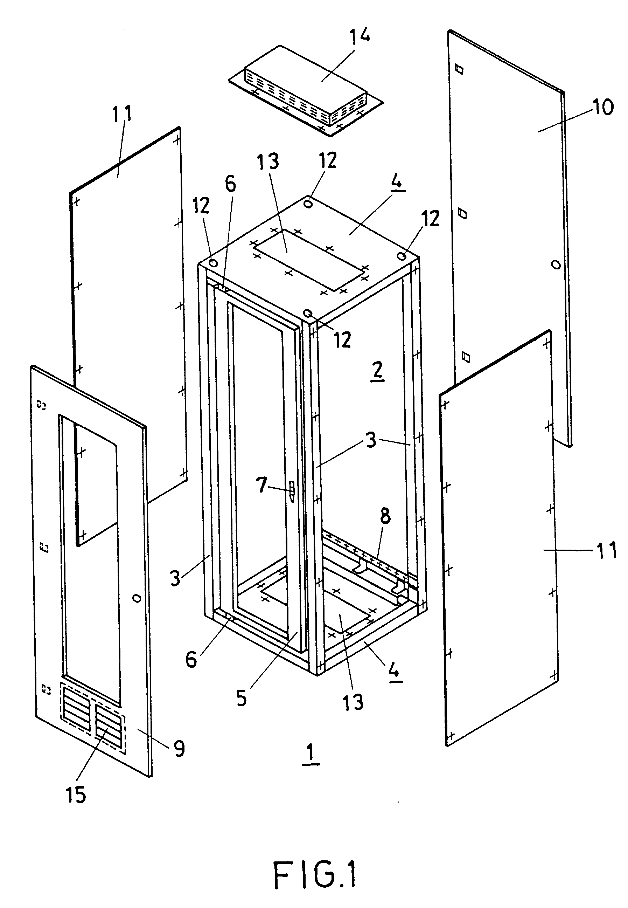

In der Figur 1 ist eine stark vereinfachte Explosionszeichnung des erfindungsgemässen Schrankes 1 dargestellt. Der Schrank 1 weist ein tragendes, metallisches Gerüst 2 auf. Dieses Gerüst 2 besteht aus vier Gerüstpfosten 3 aus Blechprofil an den Ecken der rechteckigen Grundfläche. Oben und unten sind die Gerüstpfosten 3 mit Deckblechen 4 verbunden. Diese Deckbleche 4 sind als Teil des tragenden Gerüstes 2 ausgebildet. Die beiden Deckbleche 4 sind als Gleichteile ausgebildet, wodurch die Lagerhaltung vereinfacht wird. In das Gerüst 2 ist hier beispielsweise ein Schwenkrahmen 5 eingesetzt, der für den Einbau von elektronischen Baugruppen verwendet wird. Halterungen 6, welche den Schwenkrahmen 5 tragen, sind mit den Deckblechen 4 oben und unten verschraubt. Der Schwenkrahmen 5 ist hier beispielsweise links angeschlagen und eine nicht dargestellte Riegelstange, die durch einen Handgriff 7 betätigt wird, fixiert den Schwenkrahmen 5 in der gezeigten eingeschwenkten Stellung. In das Gerüst 1 ist ferner eine Erdungsschiene 8 eingebaut, die sowohl mit dem als Bodenblech verwendeten unteren Deckblech 4 als mit den benachbarten Gerüstpfosten 3 verbunden ist. Die Gerüstpfosten 3, die Deckbleche 4 und auch der Schwenkrahmen 5 sind mit einem Bohrungsraster versehen für die Befestigung von Einbauteilen mittels gewindeformender Schrauben. Es sind auch Bohrungen vorgesehen für das bedarfsweise Anbringen von Einpressmuttern oder ähnlichen Befestigungselementen.

Der Schrank 1 weist eine Frontseite auf, die mit einer Fronttüre 9 verschliessbar ist, die mittels Scharnieren am linken der vorderen Gerüstpfosten 3 befestigt ist. Die Rückseite des Schrankes 1 ist hier beispielsweise ebenfalls mit einer mit Scharnieren versehenen Tür 10 abgedeckt, wodurch die Zugänglichkeit des Schrankinneren für Verdrahtungsarbeiten verbessert wird. An beiden Seiten wird der Schrank 1 mittels Seitenwänden 11 abgedeckt. Die Seitenwände 11 werden mit dem Gerüst 2 fest verschraubt. Im oberen Deckblech 4 sind Öffnungen 12 vorgesehen, die mit Transportösen für den Krantransport des Schrankes 1 versehen werden. Soll der Schrank 1 belüftet werden, so wird ein Ausschnitt 13 im oberen Deckblech 4 mittels eines luftdurchlässigen Domes 14 verschlossen. Durch den Dom 14 tritt erwärmte Luft aus. Die Nachströmung kühler Luft erfolgt durch Gitter 15 im unteren Teil der Fronttür 9 oder sonstige Belüftungsöffnungen, die in der Schrankverkleidung angebracht werden können. Der Ausschnitt 13 im unteren Deckblech 4 dient der Zu- und Abführung von Kabeln, wobei die freibleibende Fläche in der Regel mit Abdeckungen verschlossen wird.

Der Schrank 1 kann für verschiedene Schutzklassen vorgesehen werden. Auch Schutzklassen höher als IP 50 lassen sich einfach erreichen. Zudem ist ein Nachrüsten bereits gelieferter Schränke 1 für eine höhere Schutzklasse vor Ort mit vergleichsweise einfachen Mitteln rasch und sicher möglich.

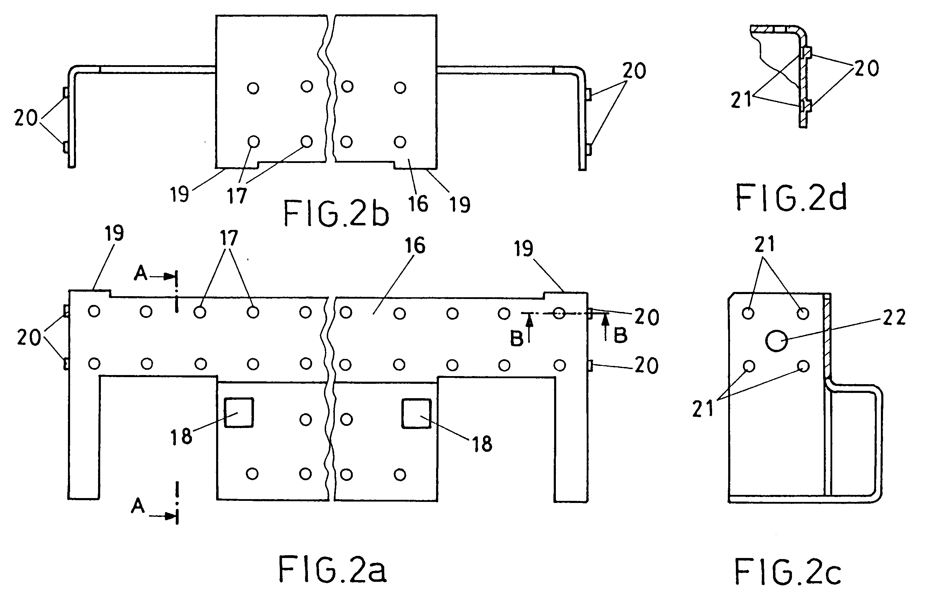

Fig. 2a zeigt eine Draufsicht auf eine aus Blech gebogene Konsole 16. Diese Konsole 16 ist ein Bestandteil des Deckblechs 4. In jedes Deckblech 4 sind zwei dieser Konsolen 16 eingeschweisst, und zwar jeweils eine front- und rückseitig. Die Konsole 16 weist ein Raster von Bohrungen 17 auf, in welche gewindeformende Schrauben eingeschraubt werden können, wenn Teile an der Konsole 16 befestigt werden sollen, zudem weist sie rechteckige Ausschnitte 18 auf, in welche bei Bedarf Riegelstangen, z.B. von einer Schwenkrahmenverriegelung eingreifen können. Fig. 2b zeigt eine Seitenansicht der Konsole 16 gemäss Fig. 2a. Fig. 2c zeigt den Schnitt A-A und Fig. 2d den Schnitt B-B durch die Konsole 16 gemäss Fig. 2a. Die Konsole 16 weist mehrere Nasen 19 auf, welche als Schweisstellen vorgesehen sind. Zudem weist sie Nocken 20 auf, die durch einen Stempel erzeugt wurden, der die Eindrücke 21 hinterliess. Im Zentrum zwischen den Nocken 20 ist eine Bohrung 22 vorgesehen.

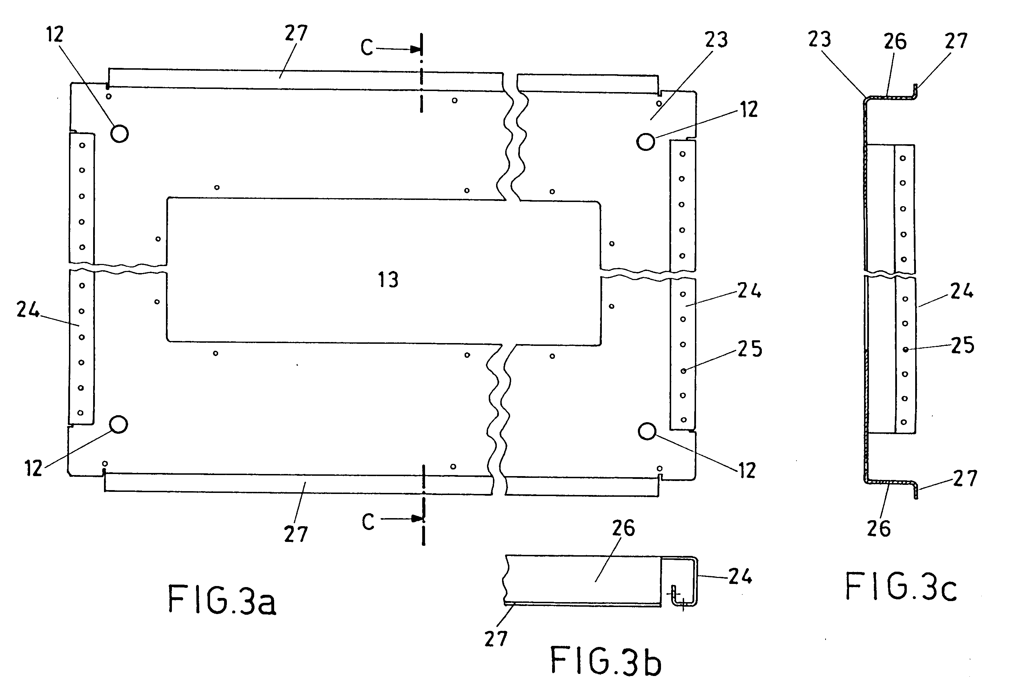

Fig. 3a zeigt eine Draufsicht auf einen aus Blech gebogenen Grundrahmen 23 des Deckblechs 4. Der Grundrahmen 23 ist in Form einer Blechwanne gebogen, wobei die Seitenwände 24 der Blechwanne, die später an den linken und rechten Seitenwänden des Schrankes 1 liegen werden, als Teil eines C-Profils aufgebogen sind, wie Fig. 3b zeigt. Die Seitenwände 24 sind zudem mit einem Raster von Bohrungen 25 versehen, in welche gewindeformende Schrauben eingeschraubt werden können. Der Boden der Blechwanne ist in der Regel mit einem Ausschnitt 13 versehen. Wie der Schnitt C-C in Fig. 3c zeigt, sind die anderen beiden Seitenwände 26 senkrecht zum Boden der Blechwanne aufgebogen und oben ist ihnen, parallel zum Boden der Blechwanne, eine nach aussen abstehende Dichtkante 27 angeformt. Die Dichtkanten 27 ragen demnach senkrecht aus der Frontseite bzw. der Rückseite des Schrankes 1 heraus.

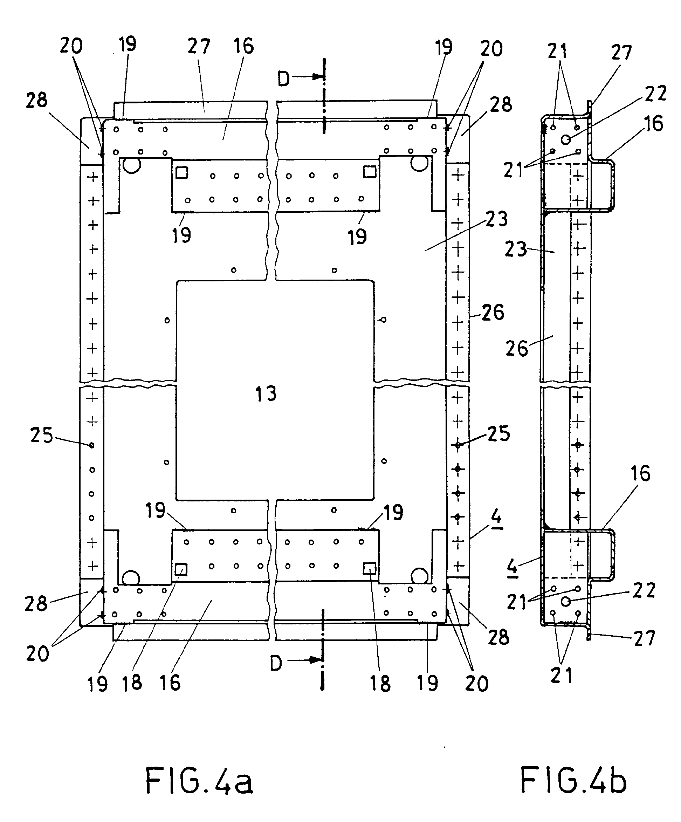

Die Fig. 4a zeigt das komplette Deckblech 4, welches aus dem Grundrahmen 23 und zwei Konsolen 16 verwindungssteif zusammengeschweisst wurde. Die beidem Konsolen 16 sind spiegelbildlich zueinander front- bzw. rückseitig eingeschweisst worden. Es wurden nicht nur an den Nasen 19 Schweissnähte angebracht, auch Seitenwände der Konsolen 16, wie aus dem Schnitt D-D, der in Fig. 4b dargestellt ist, ersichtlich ist, wurden mehrmals mit Schweissnähten am Grundrahmen 23 befestigt. Auf diese Weise wird das Deckblech 4 mit einem stabilen und verwindungssteifen Rahmen versehen. An den vier Ecken des Deckblechs 4 lässt dieser Rahmen jeweils eine rechteckige Fläche 28 frei über dem Blech des Grundrahmens 23. In den Bereich über den Flächen 28 ragen auch die Nocken 20 der Konsolen 16 hinein. Diese Nocken 20 dienen der Positionierung der Gerüstpfosten 3, die mit ihrem Querschnitt gerade die freigebliebene Fläche 28 auffüllen, sodass ein rechteckiger Grundriss des Gerüstes 2 erreicht wird.

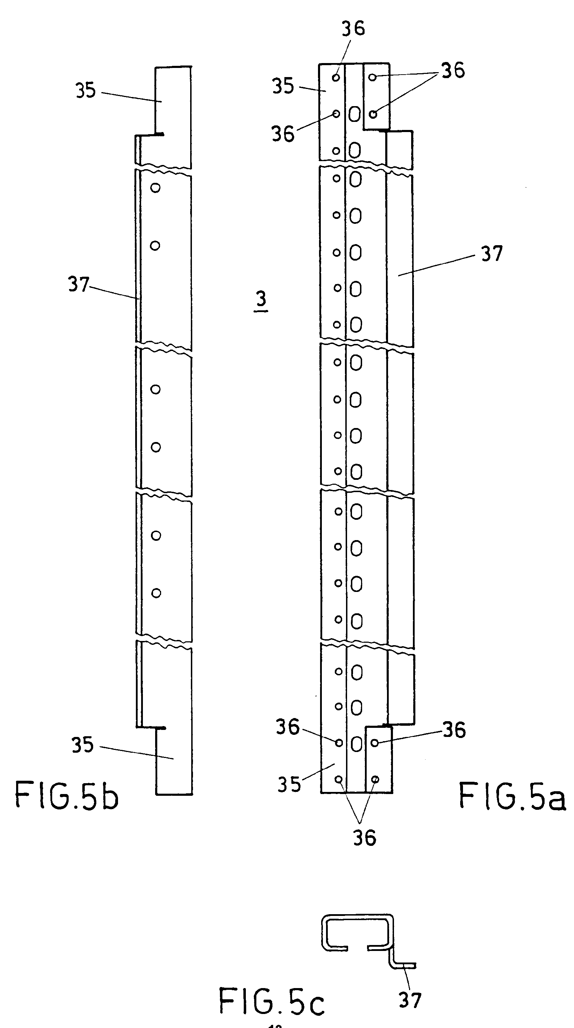

Fig. 5a zeigt einen Gerüstpfosten 3, der ebenfalls mit einem Lochraster versehen ist. Ein Teil dieser Bohrungen ist für das Anbringen von gewindeformenden Schrauben vorgesehen, während in die länglichen Ausspannungen im Bedarfsfall Einpressmuttern eingesetzt werden können. Der Gerüstpfosten 3 weist an jedem Ende ein Endstück 35 auf, welches als C-Profil ausgebildet ist, wie es die Fig. 5c zeigt, die eine Draufsicht auf den Gerüstpfosten 3 darstellt. Im Bereich des Endstücks 35 sind 4 Bohrungen 36 vorgesehen, in welche bei der Montage des Gerüstes 2 die Nocken 20 passen, wenn der Gerüstpfosten 3 entsprechend eingesetzt wird. Auf der übrigen Länge des Gerüstpfostens 3 ist ein Schenkel des C-Profils aufgebogen und mit einer angeformten Dichtkante 37 verlängert worden. Die Fig. 5b zeigt eine Seitenansicht des Gerüstpfostens 3. Je nach Höhe des Gerüstes 2 können die Gerüstpfosten 3 verschieden lang ausgebildet werden. Die Gerüstpfosten 3 werden so im Gerüst 2 fixiert, dass die angeformte Dichtkante 37 jeweils senkrecht auf der Front- bzw. der Rückseite des Schrankes 1 steht.

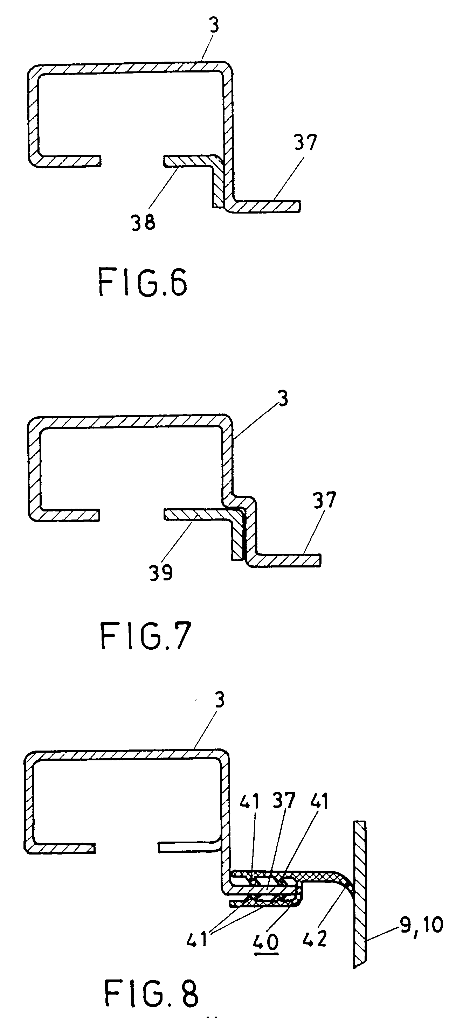

Die Fig. 6 zeigt einen Querschnitt durch einen modifizierten Gerüstpfosten 3, bei dem ein Winkelprofil 38 in dem Bereich, wo der eine Schenkel des C-Profils aufgebogen ist, zusätzlich eingeschweisst wurde. Dieses Winkelprofil 38 ergänzt das aufgebogene C-Profil zu einem, auch in diesem Bereich echten C-Profil, was bezüglich Steifigkeit der Anordnung Vorteile mit sich bringt. Das Winkelprofil 38 ist ebenfalls mit Rasterbohrungen versehen, die zu den entsprechenden Bohrungen auf dem anderen Schenkel des C-Profils passen. Um die Dicke des Winkelprofils 38 ist die Auflagefläche für zu montierende Teile kleiner als die Auflagefläche, wie sie das Endstück 35 bietet. Die Ausführung nach Fig. 7 mit dem eingeschweissten Winkelprofil 39 bietet die gleiche Auflagefläche wie das Endstück 35, wenn der aufgebogene Schenkel des C-Profils entsprechend abgekröpft wird. C-Profile, die wie das Endstück 35 ausgebildet sind, werden häufig eingesetzt, sodass auf diese Abmessungen abgestimmte Einbauteile nicht angepasst werden müssen, wenn Gerüstpfosten gemäss Fig. 7 nun neu eingesetzt werden.

Das Gerüst 2 wird nun so montiert, dass die Dichtkanten 37 der Gerüstpfosten 3 und die Dichtkanten 27 der Deckbleche 4 so aufeinanderstossen, dass eine rechteckig um die Gerüstöffnungen auf der Frontseite und auf der Rückseite des Schrankes 1 verlaufende Dichtungsleiste gebildet wird. Diese Dichtungsleiste liegt innerhalb des durch die Fronttür 9 bzw. durch die Tür 10 bedeckten Bereiches. Für eine niedrige Schutzklasse bildet diese Dichtungsleiste mit den Türen 9 bzw. 10 eine vollauf genügende Labyrinthdichtung. Soll diese Dichtungsstelle jedoch für eine höhere Schutzklasse, beispielsweise spritzwasserdicht ausgelegt werden, so wird, wie in Fig. 8 gezeigt, eine elastische Dichtung 40 auf die Dichtkante 37 aufgeschoben. Derartige Dichtungen 40 sind handelsüblich als Meterware erhältlich. Zwischen der Dichtkante 37 und der Dichtung 40 sorgen Dichtlippen 41 für eine Abdichtung. Die Dichtung 40 weist zudem eine elastische Lippe 42 auf, die sich von der Dichtkante 37 nach vorne erstreckt. Gegen diese Lippe 42 drücken die sich schliessenden Türen 9, 10, sodass eine spritzwasserdichte Abdichtung entsteht. Die Dichtung 40 wird auf die Dichtkanten 27 und 37 aufgesteckt, sodass nur eine einzige Schnittstelle entsteht, deren Ränder jedoch so gegeneinander gedrückt werden, dass an dieser Stelle kein Spritzwasser durchdringen kann.

Die Seitenwände werden mittels auf die Gerüstpfosten 3 und auf die Seitenteile der Deckbleche aufgeklebte Flachdichtungen spritzwasserdicht befestigt. Die Deckbleche 4 sind ja nach aussen hin geschlossen, sodass hier eine schutzklassenabhängige Abdichtung entfällt. Lediglich im Bereich der Ecken könnte gegebenenfalls eine zusätzliche Abdichtung mit Silikonkunststoff oder speziell angepassten Dichtungen nötig werden. Der Dom 14 muss in diesem Fall natürlich entsprechend der höheren Schutzklasse gestaltet werden und ebenso der Übergang vom Dom 14 auf das obere Deckblech 4. Der untere Ausschnitt 13 muss ebenfalls falls entsprechend der geforderten Schutzklasse abgedichtet werden. Dies sind bekannte Massnahmen, auf die hier nicht näher eingegangen zu werden braucht.

Die Befestigung der Gerüstpfosten 3 an dem jeweiligen Deckblech 4 erfolgt mittels einer in der Mitte mit einem Gewinde versehenen Druckplatte, die im C-Profil des Endstücks 35 geführt wird. Die Druckplatte ist nicht dargestellt, da derartige Verbindungen zum Stand der Technik gehören. Durch eine Bohrung 22 des jeweiligen Deckbleches 4 wird eine Schraube in das Gewinde der Druckplatte eingeschraubt und die Druckplatte drückt das Endstück 35 des Gerüstpfostens 3 gegen die Deckplatte 4. Die Nocken 20 der Deckplatte 4 greifen in die Bohrungen 36 des Endstücks 35 ein und positionieren den Gerüstpfosten 3 winkelrichtig. Für diese einfache Montage ist in der Regel keine Montagelehre nötig, sodass ein vorteilhaft rasches Arbeiten möglich ist.

Die Druckplatte kann auch länger ausgebildet sein als das Endstück 35, durch und kann auch mit dem Gerüstpfosten 3 starr verbunden sein.

### BEZEICHNUNGSLISTE

- 1: Schrank
- 2: Gerüst
- 3: Gerüstpfosten
- 4: Deckblech
- 5: Schwenkrahmen
- 6: Halterung
- 7: Handgriff
- 8: Endungsschiene
- 9: Fronttüre
- 10: Tür
- 11: Seitenwand
- 12: Öffnung
- 13: Ausschnitt
- 14: Dom
- 15: Gitter
- 16: Konsole
- 17: Bohrung
- 18: Ausschnitte
- 19: Nasen
- 20: Nocken
- 21: Eindruck
- 22: Bohrung
- 23: Grundrahmen
- 24: Seitenwände
- 25: Bohrung
- 26: Seitenwände
- 27: Dichtkante
- 28: Fläche
- 35: Endstück
- 36: Bohrung
- 37: Dichtkante
- 38, 39: Winkelprofil
- 40: Dichtung
- 41: Dichtlippe
- 42: Lippe

## Patentansprüche

1. Schrank (1) mit einem tragenden metallischen Gerüst (2) mit rechteckiger Grundfläche, mit im Bereich der Ecken der Grundfläche vorgesehenen Gerüstpfosten (3) aus Blechprofil, mit mindestens einem Dachblech und mindestens einem Bodenblech und mit am Gerüst (2) anbringbaren Verkleidungsteilen, mit einem als Deckblech (4) ausgebildeten Gleichteil, welches sowohl als Dachblech als auch als Bodenblech einsetzbar ist, und welches Deckblech (4) im Bereich der beiden Seitenwände des Schrankes durch ein angeformtes Profil versteift ist und als Teil des tragenden Gerüstes (2) ausgebildet ist, dadurch gekennzeichnet,
- dass das Deckblech (4) mittels je einer eingeschweissten Konsole (16) sowohl im Bereich der Frontseite als auch im Bereich der Rückseite des Schrankes versteift ist,
- dass an jeder Ecke des Deckblechs (4) eine Aussparung mit einer rechteckigen Fläche (28) für die Aufnahme eines Gerüstpfostens (3) vorgesehen ist, und
- dass jeder der Gerüstpfosten (3) an jedem Ende ein als C-Profil ausgebildetes Endstück (35) aufweist.

2. Schrank nach Anspruch 1, dadurch gekennzeichnet,
- dass an das Deckblech (4) auf der Frontseite und auf der Rückseite des Schrankes (1) jeweils eine Dichtkante angeformt ist, welche senkrecht zur jeweiligen Seitenfläche des Schrankes (1) steht.

3. Schrank nach Anspruch 1 und 2, dadurch gekennzeichnet,
- dass auf der übrigen Länge der Gerüstpfosten (3) ein Schenkel des C-Profils aufgebogen und mit einer angeformten Dichtkante (37) verlängert ist, und
- dass die Gerüstpfosten (3) auf der Frontseite und auf der Rückseite des Schrankes (1) jeweils so fixiert sind, dass jeweils die angeformte Dichtkante (37) senkrecht zur jeweiligen Seitenfläche des Schrankes (1) steht.

4. Schrank nach Anspruch 3, dadurch gekennzeichnet,
- dass für die Fixierung der Gerüstpfosten (3) im Deckblech (4) Schrauben vorgesehen sind.

5. Schrank nach den Ansprüchen 2 und 3, dadurch gekennzeichnet,
- dass die Dichtkanten (37) der Gerüstpfosten (3) und die Dichtkanten (27) der Deckbleche (4) so aufeinander stossen, dass eine rechteckig um die Gerüstöffnungen auf der Frontseite und auf der Rückseite des Schrankes (1) verlaufende Dichtungsleiste gebildet wird.

6. Schrank nach Anspruch 5, dadurch gekennzeichnet,
- dass auf die Dichtungsleiste eine Dichtung (40) aus elastischem Material aufschiebbar ist, die einen Spalt zwischen der jeweiligen Dichtungsleiste und dem jeweiligen Verkleidungsteil (9, 10) spritzwasserdicht abschliesst.

7. Schrank nach einem der Ansprüche 2 bis 6, dadurch gekennzeichnet,
- dass die Konsolen (16) für die Aufnahme von Halterungen (6) für den Einbau eines Schwenkrahmens (5) ausgelegt sind, und
- dass in den Konsolen (16) Ausschnitte (18) vorgesehen sind, in die eine Riegelstange eingreift, die den Schwenkrahmen (5) im eingeschwenktem Zustand fixiert.

8. Schrank nach Anspruch 3, dadurch gekennzeichnet,
- dass auf der übrigen Länge der Gerüstpfosten (3) der aufgebogene Schenkel durch ein aufgeschweisstes Winkelprofil (38,39) verstärkt wird, und
- dass das Winkelprofil (38,39) so angebracht ist, dass einer seiner Schenkel senkrecht auf dem aufgebogenen Schenkel steht, sodass das C-Profil der Endstücke (35) weitergeführt wird.

9. Schrank nach einem der voranstehenden Ansprüche, dadurch gekennzeichnet,
- dass im Deckblech (4) eine winkelrichtige Führung der Gerüstpfosten (3) vorgesehen ist.

10. Schrank nach Anspruch 9, dadurch gekennzeichnet,
- dass zur winkelrichtigen Führung der Gerüstpfosten (3) Nocken (20) verwendet werden, die mit Bohrungen (36) in den Gerüstpfosten (3) zusammenwirken.

## Claims

1. Cabinet (1) having a supporting metallic frame-work (2) exhibiting a rectangular base, having sheet-metal-profile framework posts (3) provided in the area of the corners of the base, having at least one roof panel and at least one floor panel, and having casing parts which can be fitted to the framework (2), having an identical part which is configured as a cover panel (4) and can be used both as a roof panel and as a floor panel, and which cover panel (4) is stiffened in the area of the two side walls of the cabinet by an integrally attached profile, and is configured as part of the supporting framework (2), characterized in that
- the cover panel (4) is stiffened in each case by means of a welded-in bracket (16), both in the area of the front face and in the area of the rear face of the cabinet,
- at each corner of the cover panel (4), there is provided a recess having a rectangular surface area (28) for receiving a framework post (3), and
- each of the framework posts (3) exhibits at each end an endpiece (35) configured as a C-profile.

2. Cabinet according to Claim 1, characterized in that
- to the cover panel (4) on the front face and rear face of the cabinet (1), there is respectively integrally attached a sealing edge, which stands perpendicular to the respective face of the cabinet (1).

3. Cabinet according to Claims 1 and 2, characterized in that
- on the remaining length of the framework posts (3), an arm of the C-profile is bent up and extended by an integrally attached sealing edge (37), and
- the framework posts (3) are fixed respectively on the front face and rear face of the cabinet (1) in such a way that, in each case, the integrally attached sealing edge (37) stands perpendicular to the respective face of the cabinet (1).

4. Cabinet according to Claim 3, characterized in that
- screws are provided for fixing the framework posts (3) in the cover panel (4).

5. Cabinet according to Claims 2 and 3, characterized in that
- the sealing edges (37) of the framework posts (3) and the sealing edges (27) of the cover panels (4) abut one another in such a way that a sealing strip running rectangularly around the framework openings on the front face and rear face of the cabinet (1) is formed.

6. Cabinet according to Claim 5, characterized in that
- a seal (40) of elastic material can be pushed onto the sealing strip, which seal closes off in spraywater-tight manner a gap between the respective sealing strip and the respective casing part (9, 10).

7. Cabinet according to one of Claims 2 to 6, characterized in that
- the brackets (16) are designed for receiving mountings (6) for the installation of a swivel frame (5), and
- in the brackets (16) there are provided cut-outs (18), into which a locking bar engages which fixes the swivel frame (5) in the swivelled-in state.

8. Cabinet according to Claim 3, characterized in that
- on the remaining length of the framework posts (3), the bent-up arm is reinforced by a welded-on angled profile (38, 39) and
- the angled profile (38, 39) is fitted in such a way that one of its arms stands perpendicularly on the bent-up arm, so that the C-profile of the endpieces (35) is guided onwards.

9. Cabinet according to one of the preceding claims, characterized in that
- a correctly angled guide for the framework posts (3) is provided in the cover panel (4).

10. Cabinet according to Claim 9, characterized in that
- for the correctly angled guidance of the framework posts (3), cams (20) are used which interact with bores (36) in the framework posts (3).

## Revendications

1. Armoire (1) avec une ossature métallique portante (2) avec une face de base rectangulaire, avec des montants (3) de l'ossature en tôle profilée prévus dans les angles de la face de base, avec au moins une tôle de plafond et au moins une tôle de fond et avec des pièces d'habillage à attacher à l'ossature (2), avec une pièce identique constituant une tôle de couverture (4), qui peut être utilisée aussi bien comme tôle de plafond que comme tôle de fond, et tôle de couverture (4) qui est raidie par une forme profilée dans la région des deux panneaux latéraux de l'armoire et constitue une partie de l'ossature portante (2), caractérisée en ce que
- la tôle de couverture (4) est raidie au moyen de consoles respectives (16) soudées aussi bien dans la région de la face antérieure que dans la région de la face postérieure de l'armoire; en ce que
- à chaque angle de la tôle de couverture (4), il est prévu un évidement avec une surface rectangulaire (28) pour le logement d'un montant (3) de l'ossature; et en ce que
- chacun des montants (3) de l'ossature présente à chaque extrémité une pièce d'extrémité (35) constituée par un profilé en C.

2. Armoire suivant la revendication 1, caractérisée en ce que
- sur la tôle de couverture (4) est formée, à la face antérieure et a la face postérieure de l'armoire (1), une arête d'étanchéité qui est perpendiculaire au panneau latéral respectif de l'armoire (1).

3. Armoire suivant la revendication 1 et 2, caractérisée en ce que
- sur le reste de la longueur des montants (3) de l'ossature, une branche du profilé en C est repliée et est prolongée avec une arête d'étanchéité profilée (37); et en ce que
- les montants (3) de l'ossature sont fixés tant sur la face antérieure que sur la face postérieure de l'armoire (1) de telle façon que chaque arête d'étanchéité profilée (37) soit perpendiculaire au panneau latéral respectif de l'armoire (1).

4. Armoire suivant la revendication 3, caractérisée en ce que
- il est prévu des vis pour la fixation des montants (3) de l'ossature dans la tôle de couverture (4).

5. Armoire suivant les revendications 2 et 3, caractérisée en ce que
- les arêtes d'étanchéité (37) des montants (3) de l'ossature et les arêtes d'étanchéité (27) des tôles de couverture (4) se placent l'une contre l'autre de telle manière qu'il se forme un cordon d'étanchéité entourant rectangulairement les ouvertures de l'ossature sur la face antérieure et sur la face postérieure de l'armoire (1).

6. Armoire suivant la revendication 5, caractérisée en ce que
- sur le cordon d'étanchéité, on peut glisser une garniture d'étanchéité (40) en matière élastique, qui ferme de façon étanche aux projections d'eau une fente entre le cordon d'étanchéité considéré et la pièce d'habillage considérée (9, 10).

7. Armoire suivant l'une des revendications 2 à 6, caractérisée en ce que
- les consoles (16) sont conçues pour le logement de supports (6) pour le montage d'un cadre basculant (5); et en ce que
- il est prévu, dans les consoles (16), des découpes (18) dans lesquelles s'engage une barre de verrouillage, qui fixe le cadre basculant (5) en position fermée.

8. Armoire suivant la revendication 3, caractérisée en ce que
- sur le reste de la longueur des montants (3) de l'ossature, la branche repliée est renforcée par une cornière soudée (38, 39); et en ce que
- la cornière (38, 39) est placée de telle manière qu'une de ses branches soit perpendiculaire à la branche repliée, de telle façon que le profilé en C des pièces d'extrémité (35) soit prolongé.

9. Armoire suivant l'une des revendications précédentes, caractérisée en ce que
- dans la tôle de couverture (4), il est prévu un guidage angulaire correct des montants (3) de l'ossature.

10. Armoire suivant la revendication 9, caractérisée en ce que
- pour le guidage angulaire correct des montants (3) de l'ossature, on utilise des bosses (20), qui coopèrent avec des trous (36) dans les montants (3) de l'ossature.
